# EUROPÄISCHE PATENTSCHRIFT

(11) **EP 1 319 850 B1**
(45) Veröffentlichungstag und Bekanntmachung des Hinweises auf die Patenterteilung: **26.04.2006**
(21) Anmeldenummer: 02027221.7
(22) Anmeldetag: 06.12.2002
(51) Int. Cl.: F16B 39/02

(54) **Selbstsicherndes Schraubelement**
Self-locking threaded element
Elément fileté à verrouillage automatique

(30) Priorität: 12.12.2001 DE 10161026
(43) Veröffentlichungstag der Anmeldung: 18.06.2003
(73) Patentinhaber: HILTI Aktiengesellschaft, 9494 Schaan (LI)
(72) Erfinder: Jakob, Manfred, 86916 Kaufering (DE)
(74) Vertreter: Wildi, Roland

(56) Entgegenhaltungen:
- DE-B- 1 149 578
- FR-A- 850 193
- FR-A- 950 562

## Beschreibung

Die Erfindung betrifft ein selbstsicherndes Schraubelement mit einem Klemmteil und einem, zum Klemmteil in axialem Abstand angeordneten und durch einen Verbindungssteg mit diesem verbunden Hauptteil, wobei zum Eingriff in ein Gegengewinde, Hauptteil und Klemmteil von einem Gewinde durchsetzt sind. Das Klemmteil ist zumindest in Längsrichtung des Gewindes relativ zum Hauptteil verschwenkbar.

Selbstsichemde Schraubelemente der oben genannten Art finden in vielen Gebieten Anwendung. Beispielsweise ist das Schraubelement als Mutterelement mit einem Innengewinde ausgebildet, das mit einer Gewindestange mit einem Gegengewinde zusammenwirkt. Insbesondere bei dynamischer Beanspruchung der Schraubverbindung ist das Schraubelement vorteilhafterweise selbstsichernd ausgebildet.

Aus der DE 4 034 445 ist ein selbstsicherndes Schraubelement, das ein Klemmteil und ein, zum Klemmteil in axialem Abstand angeordnetes und durch einen Verbindungssteg mit diesem verbundes Hauptteil aufweist bekannt. Das Hauptteil und das Klemmteil sind, zum Eingriff in ein Gegengewinde, von einem Gewinde durchsetzt. Das Klemmteil ist beispielsweise durch Materialschwächungen elastisch ausgebildet, damit ein Loslösen der Schraubverbindung zwischen dem Gewinde und Gegengewinde zu einer Verkrallung der beiden Elemente führt.

Nachteilig an der bekannten Lösung ist, dass sich für den Anwender ein Lösen der Schraubverbindung sehr aufwändig gestaltet.

Aus der FR 850 193 A ist ein selbstsicherndes Schraubelement in Form einer Mutter bekannt, die senkrecht zur Längsrichtung des Gewindes mit einem Schlitz versehen ist. Durch den Schlitz weist die Mutter ein Klemmteil und einen, zum Klemmteil in axialem Abstand angeordneten und durch einen Verbindungssteg mit diesem verbundenen Hauptteil auf. Das Klemmteil ist zumindest in Längsrichtung des Gewindes relativ verschwenkbar. Zwischen dem Klemmteil und dem Hauptteil kann eine Blattfeder vorgesehen sein, die mit einem Haken in eine Ausnehmung im Hauptteil zur Positionierung der Blattfeder im Schlitz eingreift.

Aus der FR 950 562 A ist eine sogenannte "Colas"-Mutter bekannt, welche einen parallel zur Längsrichtung des Gewindes verlaufenden, durchgehenden Spalt mit zwei einander gegenüberliegend angeordneten Aussparungen zur Aufnahme eines Spreiznagels aufweist. In den Spalt wird mit einem Hammer der Spreiznagel eingetrieben, worauf der Spalt aufgeweitet wird. In diesem aufgeweiteten Zustand wird die Mutter auf einen Bolzen festgeschraubt. Anschliessend wird mit einem Hebelwerkzeug der Spreiznagel entfernt, worauf die Mutter selbstsichemd in der festgeschraubten Position gehalten ist.

Der vorliegenden Erfindung liegt die Aufgabe zugrunde, ein selbstsicherndes und wirtschaftlich herstellbares Schraubelement zu schaffen, das sowohl ein einfaches Festschrauben als auch Loslösen des Schraubelements gewährleistet.

Erfindungsgemäss wird die Aufgabe dadurch gelöst, dass ein Spreizelement zum Verschwenken des Klemmteils gegenüber dem Hauptteil zumindest teilweise zwischen dem Hauptteil und dem Klemmteil angeordnet ist, wobei das Spreizelement ein bolzenförmiges Spreizteil mit einem unrunden Querschnitt aufweist. Das Spreizteil verläuft quer zur Längsrichtung des Gewindes und ist quer zur Längsrichtung des Gewindes verdrehbar.

Dadurch, dass das Klemmteil relativ zum Hauptteil bewegbar ist, ist ein Sichern und auch ein Entsichern des Schraubelements durch diese Bewegung sichergestellt. In einem gesicherten Zustand des Schraubelements, ist dieses gegen ein Loslösen gesichert, jedoch im ungesicherten Zustand ist es einem Anwender des Schraubelements einfach möglich das Schraubelement vom Gegengewinde loszulösen.

Beispielsweise findet ein derartig ausgebildetes Schraubelement in einer Werkzeugaufnahme zum Verspannen eines Werkzeuges an einer motorisch angetriebenen Antriebsspindel Anwendung. Das erfindungsgemässe als Mutter ausgebildete Schraubelement wirkt mit einem, an der Antriebsspindel angeordneten, Gegengewinde zusammen und verspannt das Werkzeug gegen einen fest an der Antriebsspindel angeordneten Flansch. Bei dieser Anwendung des Schraubelements wird durch das selbstsichernde Schraubelement ein ungewolltes Loslösen des Schraubelements von der Arbeitsspindel verhindert.

Das Klemmteil ist zumindest in Längsrichtung des Gewindes relativ zum Hauptteil verschwenkbar, um ein Sichern und Entsichern des Schraubelements zu bewirken. Vorteilhafterweise wirkt dabei beispielsweise der Verbindungssteg als Gelenk zwischen Klemmteil und Hauptteil. Eine weitere Ausführung weist beispielsweise ein elastisch ausgebildetes Klemmteil auf. Selbstverständlich ist auch eine translatorische Bewegung des Klemmteils gegenüber dem Hauptteil möglich, jedoch ist diese Ausführungsform aufwändiger in der Herstellung.

Zum Verschwenken des Klemmteils gegenüber dem Hauptteil ist ein Spreizelement vorgesehen, um eine von Aussen betätigbare Sicherung des Schraubelements sicherzustellen, insbesondere unabhängig davon, ob das Schraubelement in die Eindrehrichtung oder Ausdrehrichtung gedreht wird.

Das Spreizelement ist zumindest teilweise zwischen dem Hauptteil und dem Klemmteil angeordnet, um eine möglichst kompakte Bauweise sicherzustellen.

Das Spreizelement weist ein bolzenförmiges Spreizteil auf, das zum Bewegen des Klemmteils zum Hauptteil dient.

Insbesondere dadurch, dass das Spreizteil einen unrunden Querschnitt aufweist, führt eine Rotationsbewegung des Spreizteils zu einer Bewegung und damit zum Verkeilen des Schraubelements.

Das Spreizteil verläuft quer zur Längsrichtung des Gewindes, um auf eine konstruktiv einfache Art und Weise das Klemmteil mittels Betätigung des Spreizteils in Längsrichtung des Gewindes zu bewegen, insbesondere ein Verklemmen des Schraubelements herbeizuführen.

Das Spreizteil ist quer zur Längsrichtung des Gewindes verdrehbar, um durch eine Rotationsbewegung des Spreizteils die Bewegung des Klemmteils zum Hauptteil zu bewirken.

In einer vorteilhaften Ausführungsform weist das Spreizelement ein Betätigungsteil zum Verdrehen des Spreizteils auf, um eine Anwendung des Schraubelements handlich zu gestalten.

Um eine wirtschaftliche Herstellung des Schraubelements zu gewährleisten sind das Hauptteil, das Klemmteil und der Verbindungssteg zusammen einteilig ausgebildet. In einer weiteren vorteilhaften Ausführungsform ist das Spreizelement einteilig ausgebildet.

Die Erfindung wird nachstehend anhand eines Ausführungsbeispieles näher erfäutert. Es zeigen:
- Fig. 1: eine perspektivische Ansicht eines erfindungsgemässen selbstsichemden Schraubelements im gesicherten Zustand;
- Fig. 2: eine Seitenansicht des in Fig. 1 dargestellten Schraubelements im gesicherten Zustand;
- Fig. 3: eine Seitenansicht des in Fig. 1 dargestellten Schraubelements im ungesicherten Zustand.

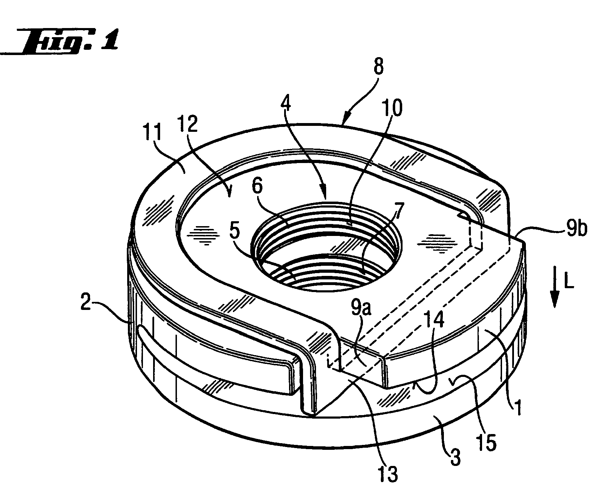

In den Fig. 1 bis 3 ist ein erfindungsgemässes selbstsicherndes Schraubelement, insbesondere eine im wesentlichen zylinderförmiges Mutterelement, mit einem Klemmteil 1 und einem, zum Klemmteil 1 in axialem Abstand a angeordneten und durch einen Verbindungssteg 2 mit diesem verbunden Hauptteil 3, dargestellt. Das Hauptteil 3 und Klemmteil 1 sind von einem Gewinde 4, insbesondere von einem Innengewinde durchsetzt. Das Klemmteil 1 ist in Längsrichtung L des Gewindes 4 relativ zum Hauptteil 3 bewegbar.

Das Hauptteil 3 weist einen im wesentlichen kreisförmigen Querschnitt und etwa mittig eine, mit einem ersten Innengewinde 7 versehene, Durchgangsbohrung 5 auf. Das Klemmteil 1 weist einen kreisförmigen Querschnitt auf, dessen Durchmesser etwa dem des Hauptteils 3 entspricht. Ferner weist das Klemmteil 1 eine mittig angeordnete Durchgangsbohrung 6 mit einem zweiten Innengewinde 10 auf, das koaxial zum ersten Innengewinde 7 verläuft. Der Verbindungssteg 2 verbindet das Hauptteil 3 und das Klemmteil 1 radial im radial äusseren Bereich der beiden Teile 1, 3 miteinander.

Diametral vom Verbindungssteg 2 ist zum Verschwenken des Klemmteils 1 gegenüber dem Hauptteil 3 ein, insgesamt mit 8 bezeichnetes, Spreizelement vorgesehen. Das Spreizelement 8 ist durch zwei, am Klemmteil 1 angeordnete Ausnehmungen 9a, 9b verschwenkbar zwischen dem Hauptteil 3 und dem Klemmteil 1 gelagert. Das Spreizelement 8 weist ein unrundes, insbesondere mit einem rechteckigen Querschnitt, ausgebildetes Spreizteil 13 auf. Ferner weist das hebelartig ausgebildete Spreizelement 8 ein u-förmiges Betätigungsteil 11 auf, das einteilig mit dem Spreizteil 13 ausgebildet ist.

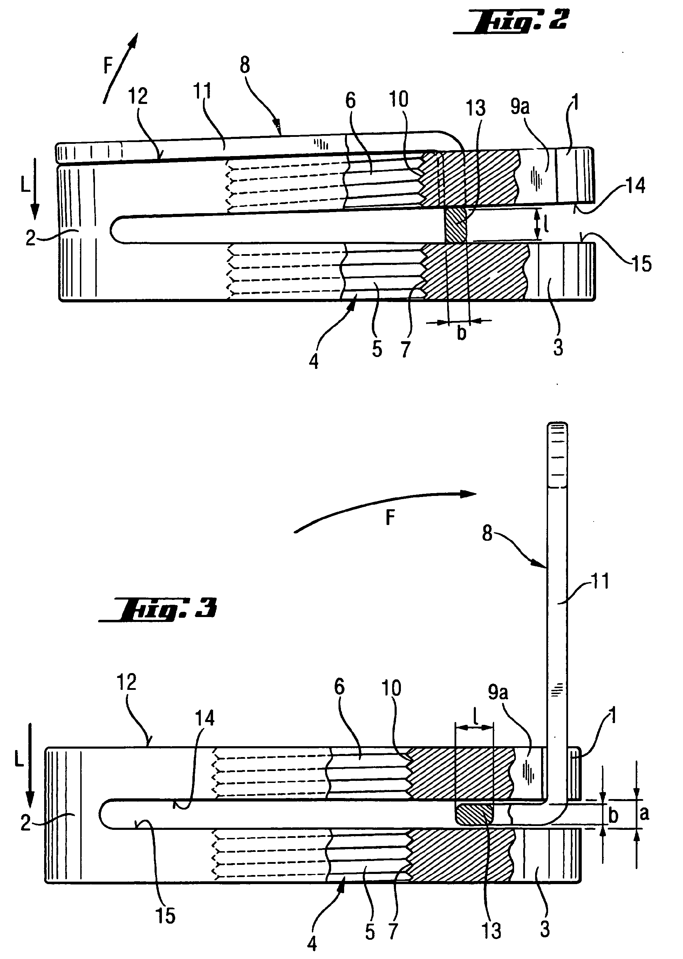

In der Fig. 1 und 2 ist das Schraubelement im gesicherten Zustand dargestellt. Das scheibenförmige Betätigungsteil 11 liegt auf der nach aussen gewandten Stirnfläche 12 des Klemmteils 1 an und rechtwinklig dazu erstreckt sich das zwischen den beiden inneren Stirnflächen 14, 15 des Klemmteils 1 und des Hauptteils 3 anliegende Spreizteil 13. Das einen rechteckigen Querschnitt mit einer Länge I und einer Breite b aufweisende Spreizteil 13 ist im gesicherten Zustand des Schraubelements derart ausgerichtet, dass die Länge I parallel zur Längsrichtung L des Gewindes, insbesondere zum ersten und zweiten Innengewinde 7,10 verläuft. Da die Länge I des Querschnitts des Spreizteils 13 grösser ist als der Abstand a des Klemmteils 1 zum Hauptteil 3, ist das Klemmteil 1 im Bereich des Spreizteils 13 gegenüber dem Hauptteil 3 verschwenkt. Diese Auslenkung der beiden Teile, insbesondere der beiden Innengewinde 7, 10 führen zu einem Verklemmen des nicht dargestellten Gegengewindes im Gewinde 4 und dadurch zur Sicherung des Schraubelements, insbesondere des Mutterelements.

In Fig. 3 ist das Schraubelement im ungesicherten Zustand dargestellt. Durch ein Verschwenken, des in Fig. 1 und 2 dargestellten, Spreizelements 8 in eine Freigaberichtung F um 90° um die Längsachse des Spreizteils 13 wird das Schraubelement in den ungesicherten Zustand überführt. Im ungesicherten Zustand des Schraubelements ist das Spreizteil 13 derart ausgerichtet, dass die Breite b parallel zur Längsrichtung L des Gewindes, insbesondere zum ersten und zweiten Innengewinde 7,10 verläuft. Da die Breite b des Querschnitts des Spreizteils 13 kleiner ist als der Abstand a des Klemmteils 1 zum Hauptteil 3, verläuft das Klemmteil 1 parallel in einem Abstand a zum Hauptteil 3. Dadurch findet kein Verkeilen des Gegengewindes statt.

Um eine wirtschaftliche Herstellung des Schraubelements sicherzustellen ist das Hauptteil 3, das Klemmteil 1 und der Verbindungssteg 2 zusammen einteilig ausgebildet.

## Patentansprüche

1. Selbstsicherndes Schraubelement mit einem Klemmteil (1) und einem, zum Klemmteil (1) in axialem Abstand (a) angeordneten und durch einen Verbindungssteg (2) mit diesem verbundenen Hauptteil (3), wobei zum Eingriff in ein Gegengewinde, Hauptteil (3) und Klemmteil (1) von einem Gewinde (4) durchsetzt sind, wobei das Klemmteil (1) zumindest in Längsrichtung (L) des Gewindes (4) relativ zum Hauptteil (3) verschwenkbar ist, **dadurch gekennzeichnet, dass** ein Spreizelement (8) zum Verschwenken des Klemmteils (1) gegenüber dem Hauptteil (3) zumindest teilweise zwischen dem Hauptteil (3) und dem Klemmteil (1) angeordnet ist, wobei das Spreizelement (8) ein bolzenförmiges Spreizteil (13) mit einem unrunden Querschnitt aufweist, wobei das Spreizteil (13) quer zur Längsrichtung des Gewindes verläuft und quer zur Längsrichtung des Gewindes verdrehbar ist.

2. Schraubelement nach Anspruch 1, **dadurch gekennzeichnet, dass** das Spreizelement (8) ein Betätigungsteil (11) zum Verdrehen des Spreizteils (13) aufweist.

3. Schraubelement nach Anspruch 1 oder 2, **dadurch gekennzeichnet, dass** das Hauptteil (3), das Klemmteil (1) und der Verbindungssteg (2) zusammen einteilig ausgebildet sind.

## Claims

1. Self-locking threaded element having a clamping component (1) and a principal component (3) arranged at an axial distance (a) from the clamping component (1) and joined to the latter by a connecting bracket (2), the principal component (3) and the clamping component (1) being threaded (4) for engagement in a mating thread, and the clamping component (1) being adapted to be swivelled with respect to the principal component (3), at least in the longitudinal direction (L) of the thread (4), **characterised in that** an expansion element (8) for swivelling the clamping component (1) with respect to the principal component (3) is arranged at least in part between the principal component (3) and the clamping component (1), the expansion element (8) incorporating a bolt-shaped expansion component (13) of oval cross-section, and the expansion component (13) extending transversely to the longitudinal direction of the thread and being adapted to be twisted transversely to the longitudinal direction of the thread.

2. Threaded element according to claim 1, **characterised in that** the expansion element (8) incorporates an actuating component (11) for twisting the expansion component (13).

3. Threaded element according to claim 1 or 2, **characterised in that** the principal component (3), the clamping component (1) and the connecting bracket (2) are together configured as a single piece.

## Revendications

1. Élément de vis autobloquant avec une partie de serrage (1) et une partie principale (3) disposée à distance axiale (a) de la partie de serrage (1) et reliée à celle-ci par l'intermédiaire d'un talon de liaison (2), la partie principale (3) et la partie de serrage (1) étant traversées par un filetage (4) destiné à s'engager dans un contre-filetage, la partie de serrage (1) pouvant pivoter par rapport à la partie principale (3) au moins dans la direction longitudinale (L) du filetage (4), **caractérisé en ce qu'**un élément d'écartement (8) est disposé au moins en partie entre la partie principale (3) et la partie de serrage (1) pour faire pivoter la partie de serrage (1) par rapport à la partie principale (3), l'élément d'écartement (8) comportant une partie d'écartement en forme de goujon (13) à section transversale non ronde, la partie d'écartement (13) s'étendant transversalement à la direction longitudinale du filetage et pouvant tourner transversalement à la direction longitudinale du filetage.

2. Élément de vis selon la revendication 1, **caractérisé en ce que** l'élément d'écartement (8) comporte une partie d'actionnement (11) pour faire tourner la partie d'écartement (13).

3. Élément de vis selon la revendication 1 ou 2, **caractérisé en ce que** la partie principale (3), la partie de serrage (1) et le talon de liaison (2) sont réalisés ensemble d'un seul tenant.
